# EUROPÄISCHE PATENTSCHRIFT

(11) **EP 3 365 639 B1**
(45) Veröffentlichungstag und Bekanntmachung des Hinweises auf die Patenterteilung: **16.12.2020**
(21) Anmeldenummer: 16763508.5
(22) Anmeldetag: 08.09.2016
(51) Int. Cl.: G01F 1/684, G01F 15/14

(54) **THERMISCHES DURCHFLUSSMESSGERÄT**
THERMAL FLOW METER
DÉBITMÈTRE THERMIQUE

(30) Priorität: 23.10.2015 DE 102015118130
(43) Veröffentlichungstag der Anmeldung: 29.08.2018
(73) Patentinhaber: Endress+Hauser Flowtec AG, 4153 Reinach (CH)
(72) Erfinder: GABERTHÜEL, Stephan, 4104 Oberwil (CH); PFAU, Axel, 79664 Wehr (CH); BAUR, Tobias, 4145 Reinach (CH)
(74) Vertreter: Andres, Angelika Maria
(86) Internationale Anmeldenummer: PCT/EP2016/071210
(87) Internationale Veröffentlichungsnummer: WO 2017/067702

(56) Entgegenhaltungen:
- DE-A1-102008 015 359
- DE-A1-102010 018 947
- DE-U1- 20 309 694
- DE-U1- 20 309 694
- US-A1- 2011 048 564
- US-A1- 2015 192 442

## Beschreibung

Die vorliegende Erfindung betrifft ein thermisches Durchflussmessgerät. Die konstruktive Ausgestaltung von thermischen Durchflussmessgeräten ist an sich bekannt. Ausgehend von einem meist zylindrischen Hohlkörper mit einer Grundfläche erstrecken sich zumindest zwei zylindrische Stifthülsen in Richtung des Innenraumes eines Rohres. Diese Stifthülsen sind jedoch zumeist durch Schweißnähte mit dem zylindrischen Hohlkörper verbunden. Ein typisches Beispiel ist in der DE 10 2010 061 731 A1 dargestellt und beschrieben.

Die US 2011/0048564 A1 ehrt ein thermisches Durchflussmessgerät, welches einen Strömungskonditionierer stromabwärts des thermischen Messaufnehmers aufweist mit in Strömungsrichtung divergierende Wände zum Optimieren der Messwerte des Medienstroms vom Messwandler. Nach dem Montieren derartiger Durchflussmessgeräte in eine Rohrleitung ist nachträglich oft nicht ersichtlich, aus welcher Richtung das Durchflussmessgerät mit dem Medium angeströmt wird.

Die vorliegende Erfindung setzt daher bei der Aufgabe an, die vorgenannten Probleme zu vermeiden.

Die Erfindung löst diese Aufgabe durch ein thermisches Durchflussmessgerät mit den Merkmalen des Anspruchs 1.

Ein erfindungsgemäßes thermisches Durchflussmessgerät umfasst einen Sensor mit einem metallischen Sensorgehäuse.

Das metallische Sensorgehäuse weist einen Hohlkörper zum Anschluss an eine Einsteckvorrichtung und/oder eine Rohrwandung auf. Eine Einsteckvorrichtung kann z.B. ein Gestänge sein, an dessen Ende das vorgenannte Sensorgehäuse angeordnet ist. Dieses Gestänge wird sodann durch eine Öffnung, die zumeist im Schwerefeld am obersten Punkt eines Rohres angeordnet ist, in das Rohr eingeführt. Die zur Umwelt begrenzende Wandung des Sensorgehäuses ist somit teilweise oder vollständig einer im Rohr befindlichen Strömung eines des Messmediums ausgesetzt. Alternativ zur Einsteckvorrichtung kann das metallische Sensorgehäuse auch direkt oder mittels einer Rohrverlängerung fest an einer Rohrwandung fixiert sein. Die Art der Festlegung des Sensorgehäuses bzw. des Hohlkörpers ist im Rahmen der vorliegenden Erfindung jedoch nur von nachrangiger Bedeutung.

Der vorgenannte Hohlkörper weist eine Grundfläche auf. Diese Grundfläche kann beispielsweise eben oder gewölbt ausgebildet sein.

Das Sensorgehäuse weist zumindest zwei Stifthülsen auf, welche ausgehend von der Grundfläche in den Innenbereich eines Rohres hineinragen. Die Stifthülsen können z.B. zylindrisch oder prismatisch ausgebildet sein.

Das erfindungsgemäße metallische Sensorgehäuse ist einstückig mittels eines Strahlschmelzverfahrens ausgebildet und die Stifthülsen und der Hohlkörper sind nahtfrei miteinander verbunden. Bislang war es üblich die Stifthülsen mit dem Hohlkörper zu fügen und anschließend zu verschweißen. Bei diesen Konstruktionen wurde ein Wärmeübergang geschaffen, welcher sich bei Temperaturwechsel des Mediums ändert und produktionsbedingt nicht für jedes Sensorgehäuse reproduzierbar ist. Dies kann zu einem Messfehler führen der für jedes Sensorgehäuse individuell groß ist. Des Weiteren weist das Sensorgehäuse einen bogenförmigen Bügel auf, welcher zumindest die erste und zweite Stifthülse überspannt und welcher mit dem Hohlkörper nahtfrei verbunden ist.

Nahtfrei bedeutet im Kontext der vorliegenden Erfindung, dass weder eine Schweißnaht noch eine Klebe- oder Lötnaht als Verbindung zwischen den Stifthülsen und dem Hohlkörper vorhanden ist.

Das Sensorgehäuse weist drei Stifthülsen, also die erste, die zweite und eine dritte Stifthülse, auf, welche vorzugsweise parallel zueinander verlaufen. Zwei der Stifthülsen können, wie zuvor beschrieben mit einem Heizer und einem Temperatursensor zur Ermittlung der Mediumstemperatur ausgestattet sein. Sie ermöglichen die Durchflussmessung in an sich bekannter Weise. Die dritte Sensorhülse weist ebenfalls einen Heizer, vorzugsweise in analoger Ausgestaltung zum Heizer der beiden anderen Stifthülsen auf. Beispielsweise bei ungleichmäßiger Anschmutzung oder Korrosion der jeweiligen Stifthülsen wird die Ermittlung und/oder Kompensation eines Sensordrifts vorteilhaft ermöglicht. Diese zusätzliche Stifthülse kann dabei ebenfalls vorteilhaft einstückig und nahtlos mit dem Hohlkörper verbunden sein.

Das Sensorgehäuse weist in Strömungshindernis auf, welches derart zur dritten Stifthülse angeordnet ist, dass diese ausgehend bei Anströmung des Sensorgehäuses aus einer vorbestimmten Strömungsrichtung teilweise oder vollständig im Strömungsschatten des Strömungshindernisses liegt, während die anderen beiden Stifthülsen außerhalb des Strömungsschattens angeordnet sind. In der dritten Stifthülse ist ein Heizer angeordnet. Dieser erlaubt eine Richtungserkennung je nachdem, ob die Strömung des Messmediums aus der vorgenannten Strömungsrichtung und dadurch die Anströmung und der Abtransport der Wärme des Heizers durch das Strömungshindernis behindert wird, oder ob die Strömungsrichtung des Messmediums entgegengesetzt zur oben genannten Strömungsrichtung ist. In letzterem Fall liegt die dritte Stifthülse nicht im Strömungsschatten des Strömungshindernisses.

Das Strömungshindernis kann vorzugsweise als eine prismenförmige Stifthülse, z.B. mit dreieckigem Querschnitt, ausgestaltet sein, welche besonders bevorzugt parallel zu den anderen drei Stifthülsen verläuft.

Die dritte Stifthülse und/oder das stiftförmige Element können ausgehend von der Grundfläche des Hohlkörpers in den Innenbereich des Rohres hineinragen und nahtfrei mit dem Hohlkörper verbunden sein, wobei die Gesamtlänge der dritten Stifthülse und/oder des Strömungshindernisses vorzugsweise geringer ist als die Gesamtlänge der ersten beiden Stifthülsen. Dadurch beeinflusst der Heizer im dritten Sensorelement nicht die Durchflussmessung, da er auf einer anderen Ebene senkrecht zur Längsachse des Sensorgehäuses angeordnet ist als der Heizer und der Temperatursensor der ersten beiden Stifthülsen.

Vorteilhafte Ausgestaltungen der Erfindung sind Gegenstand der Unteransprüche.

Das metallische Sensorgehäuse ist als ein monolithisches Bauteil ausgebildet.

Das bedeutet, dass das Sensorgehäuse aus komplett einem Material gefertigt ist. Zwar sind durch generative Fertigungsverfahren auch Kombinationen aus mehreren Metallen oder Metalllegierungen, z.B. Stahl und Titan, realisierbar, diese sind im Rahmen der vorliegenden Erfindung umfasst, jedoch gegenüber der monolithischen Ausführung nicht bevorzugt.

Bislang war es üblich die Stifthülsen mit dem Hohlkörper zu fügen und anschließend zu verschweißen. Bei diesen Konstruktionen wurde ein Wärmeübergang geschaffen, welcher sich bei Temperaturwechsel des Mediums ändert und produktionsbedingt nicht für jedes Sensorgehäuse reproduzierbar ist. Dies kann zu einem Messfehler führen, der für jedes Sensorgehäuse individuell groß ist.

Es ist von Vorteil, wenn jede der Stifthülsen jeweils einen endständigen Abschnitt mit einer mediumsberührenden Stirnfläche aufweist und dass in einer ersten der beiden Stifthülsen, insbesondere in dem endständigen Abschnitt dieser Stifthülse, ein Heizer angeordnet ist und dass in einer zweiten der beiden Stifthülsen, insbesondere in dem endständigen Abschnitt dieser Stifthülse, ein Temperatursensor zur Ermittlung der Mediumstemperatur angeordnet ist. Diese Ausgestaltung beschreibt ein typisches thermisches Durchflussmessgerät mit einem Heizer und einem Temperatursensor, welche größtenteils thermisch voneinander entkoppelt, in zwei gesonderten metallischen Stifthülsen gelagert sind. Diese werden oft auch als Sensorelemente bezeichnet. Oftmals werden als Heizer und als Temperatursensor zwei artgleiche beheizbare Widerstandsthermometer, z.B. PT100-Sensoren eingesetzt, von denen ein Widerstandsthermometer aktiv beheizt und folglich als Heizer eingesetzt wird. Diese Sensorelemente ermöglichen die Durchflussmessung. Ein derart ausgestaltetes Durchflussmessgerät ist an sich bekannt und wird seit vielen Jahren kommerziell vertrieben, allerdings sind die zumeist zylindrischen Stifthülsen mit den entsprechenden beheizbaren Widerstandsthermometern in den bisherigen Varianten des Standes der Technik stets mit dem Hohlkörper verschweißt. In einer bevorzugten erfindungsgemäßen Variante können auch mehrere beheizbare Widerstandsthermometer in eine Hülse eingebracht werden.

Es ist von Vorteil, wenn die Stifthülsen des erfindungsgemäßen thermischen Durchflussmessgerätes zumindest in dem endständigen Abschnitt eine Wandstärke von weniger als 0,5 mm, vorzugsweise zwischen 0,1-0,4 mm, aufweist. Durch die sehr dünne Wandstärke erfolgt ein schnelles Ansprechen des Sensors bei Änderung der Durchflussgeschwindigkeit.

Ein thermisches Durchflussmessgerät weist stets eine gewisse Empfindlichkeit auf die Umgebungstemperatur auf. Auch die möglichst optimale Wärmeverteilung z.B. der vom Heizer ausgestrahlten Wärme, entlang der Metallwandung der Stifthülse ist bevorzugt. In diesem Kontext ist es von Vorteil, wenn die Wandstärke, zumindest im Bereich des endständigen Abschnitts, um weniger als 20%, vorzugsweise um weniger als 10%, variiert.

Ein gutes Ansprechverhalten bei gleichzeitiger guter thermischer Entkopplung zwischen Heizer und Temperatursensor kann erreicht werden, wenn die beiden vorgenannten Stifthülsen besonders dünn und lang ausgestaltet sind. Es ist von Vorteil, wenn endständige Abschnitt der Stifthülse eine zylindrische Mantelfläche aufweist mit einem Durchmesser d1 und dass sich der endständige Abschnitt über eine Länge I2 erstreckt, dadurch gekennzeichnet, dass das Verhältnis I2/d1 größer oder gleich 5, vorzugsweise größer oder gleich 7, ist. Derartige Stifthülsen, welche zudem einstückig und nahtfrei in einem Sensorgehäuse integriert sind, sind bislang nicht bekannt.

Für eine Druckstabilität und chemische Stabilität ist es von Vorteil, wenn das Sensorgehäuse aus Stahl und/oder Titan und/oder Hastalloy besteht.

Oft werden Verbindungen an Stößen durch Schweißen geschaffen. Je nach Stoßart können verschiedene Schweißnähte angewendet werden, die unterschiedliche Naht- oder Fugenform und verschiedenartigen Nahtaufbau haben. Man unterscheidet Stumpf- und Kehlnähte. In Stumpfnähten verlaufen die Kraftlinien mit relativ gleichmäßiger Spannungsverteilung, während bei Kehlnähten die Kraftlinien umgelenkt werden, was zu Spannungsspitzen führt.

Im Bereich der thermischen Durchflussmessung hat das übliche Vorgehen des Fügens und anschließenden Schweißens Nachteile, da sich am Spalt bzw. Stoß die Wärmeübergänge bei Temperaturwechsel ändern. Dies kann zu Messfehlern führen.

Das Sensorgehäuse weist einen bogenförmigen Bügel auf, welcher zumindest die erste und zweite Stifthülse überspannt und welcher vorzugsweise mit dem Hohlkörper verbunden ist. Dieser Bügel dient der Strömungsführung. Die Anordnung der zumindest zwei Stifthülsen kann eine Verbindungsachse ausbilden, welche in einer Symmetrieebene liegt. Der Bügel liegt vorzugsweise ebenfalls auf dieser Symmetrieebene und ist symmetrisch entlang dieser Symmetrieebene ausgebildet.

Der Bügel ist hahtfrei mit dem Hohlkörper verbunden.

Die Länge des endständigen Abschnitts beträgt vorteilhaft zumindest 2 mm, vorzugsweise 3-10 mm, die Gesamtlänge einer Stifthülse beträgt vorzugsweise zumindest 10 mm. Entsprechend lange Stifthülsen ermöglichen eine besonders gute thermische Entkopplung.

Das Sensorgehäuse des erfindungsgemäßen Durchflussmessgerätes kann mittels eines generativen Fertigungsverfahrens, vorzugsweise mittels eines Strahlschmelzverfahrens hergestellt werden. Zwar sind entsprechende Sensorgehäuse auch über andere Fertigungsverfahren, so z.B. durch Urformverfahren, insbesondere durch das Metal Injection Molding realisierbar, allerdings hat sich gezeigt, dass besonders gute Fertigungstoleranzen und besonders dünnwandige Bauteile mit den vorgenannten bevorzugten Fertigungsverfahren erreichbar sind.

Nachfolgend wird die Erfindung anhand eines Ausführungsbeispiels und unter Zuhilfenahme der beigefügten Zeichnungen näher erläutert. Diese Beschreibung und die Figuren sind exemplarisch zu verstehen und in keinster Weise einschränkend für den Schutzbereich der vorliegenden Erfindung. Es zeigen:
- Fig. 1: Perspektivdarstellung eines Sensorgehäuses eines erfindungsgemäßen thermischen Durchflusssensors; und
- Fig. 2: Schnittansicht des Sensorgehäuses der Fig. 1; und
- Fig. 2a: geschnittene Draufsicht der Fig. 1.

Herkömmliche thermische Durchflussmessgeräte verwenden üblicherweise zwei möglichst gleichartig ausgestaltete beheizbare Widerstandsthermometer, die in, meist stiftförmigen Metallhülsen, sog. Stingers oder in zylindrischen Metallhülsen angeordnet sind und die in thermischem Kontakt mit dem durch ein Messrohr oder durch die Rohrleitung strömenden Medium sind. Für die industrielle Anwendung sind beide Widerstandsthermometer üblicherweise in ein Messrohr eingebaut; die Widerstandsthermometer können aber auch direkt in der Rohrleitung montiert sein. Einer der beiden Widerstandsthermometer ist ein sogenanntes aktives Sensorelement, der mittels einer Heizeinheit beheizt wird. Als Heizeinheit ist entweder eine zusätzliche Widerstandsheizung vorgesehen, oder bei dem Widerstandsthermometer selbst handelt es sich um ein Widerstandselement, z. B. um einen RTD-(Resistance Temperature Device)Sensor, der durch Umsetzung einer elektrischen Leistung, z. B. durch eine entsprechende Variation des Messstroms erwärmt wird. Im Bereich der thermischen Durchflussmessung wird das aktive Sensorelement auch oft Heizer genannt. Bei dem zweiten Widerstandsthermometer handelt es sich um ein sog. passives Sensorelement: Es misst die Temperatur des Mediums.

Üblicherweise wird in einem thermischen Durchflussmessgerät ein beheizbares Widerstandsthermometer so beheizt, dass sich eine feste Temperaturdifferenz zwischen den beiden Widerstandsthermometer einstellt. Alternativ ist es auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Widerstandsthermometers wesentlich von dem Massedurchfluss des vorbeiströmenden Mediums abhängig. Da das Medium kälter ist als das beheizte Widerstandsthermometer, wird durch das vorbeiströmende Medium Wärme von dem beheizten Widerstandsthermometer abtransportiert. Um also bei einem strömenden Medium die feste Temperaturdifferenz zwischen den beiden Widerstandsthermometern aufrecht zu erhalten, ist eine erhöhte Heizleistung für den beheizten Widerstandsthermometer erforderlich. Die erhöhte Heizleistung ist ein Maß für den Massedurchfluss bzw. den Massestrom des Mediums durch die Rohrleitung. Die Heizleistung kann durch einen sogenannten Leistungskoeffizienten PC beschrieben werden.

Wird hingegen eine konstante Heizleistung eingespeist, so verringert sich infolge des Durchflusses des Mediums die Temperaturdifferenz zwischen den beiden Widerstandsthermometern. Die jeweilige Temperaturdifferenz ist dann ein Mass für den Massedurchfluss des Mediums durch die Rohrleitung bzw. durch das Messrohr.

Es besteht somit ein funktionaler Zusammenhang zwischen der zum Beheizen des Widerstandsthermometers notwendigen Heizenergie und dem Massedurchfluss durch eine Rohrleitung bzw. durch ein Messrohr. Die Abhängigkeit des Wärmeübertragungskoeffizienten von dem Massedurchfluss des Mediums durch das Messrohr bzw. durch die Rohrleitung wird in thermischen Durchflussmessgeräten zur Bestimmung des Massedurchflusses genutzt. Geräte, die auf diesem Prinzip beruhen, werden von der Anmelderin unter der Bezeichnung, 't-switch', 't-trend' oder 't-mass' angeboten und vertrieben.

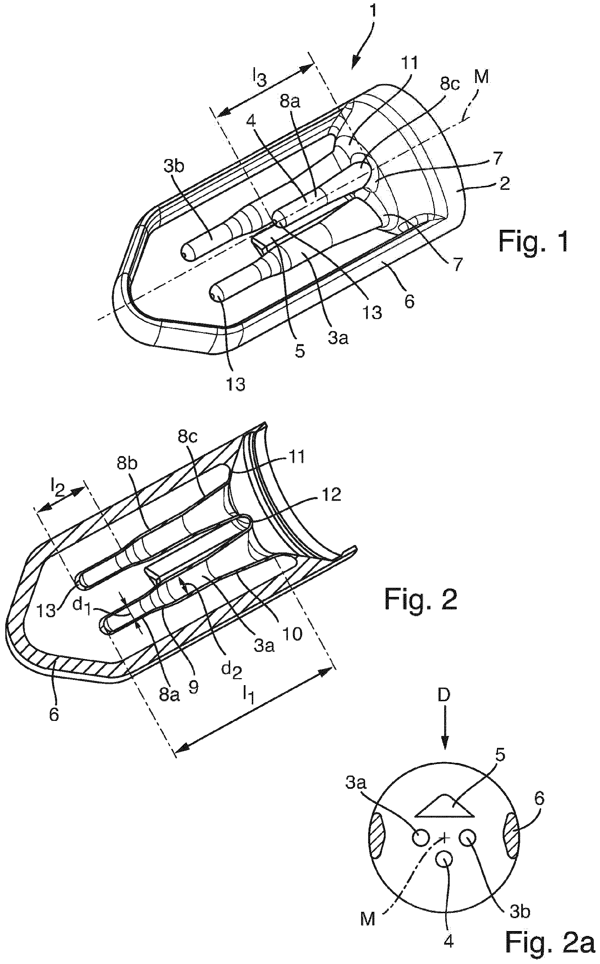

In Fig. 1, 2 und 2a ist eine besondere Variante eines thermischen Durchflussmessgerätes näher dargestellt. Dabei erkennt man insbesondere das Gehäuse eines Messaufnehmers eines thermischen Durchflussmessgerätes, welches nachfolgend als Sensorgehäuse 1 bezeichnet wird. Dieses Gehäuse ist aus Metall und kann als Einstecksensor ausgebildet sein oder fest, ggf. mit einem Zwischenstück, an der Innenwandung eines Messrohres festgelegt sein.

Zusätzlich zum Messaufnehmer weist das thermische Durchflussmessgerät selbstverständlich auch eine Auswerteeinheit auf, welche jedoch aus Gründen der Übersichtlichkeit nicht näher dargestellt ist.

Das nachfolgend beschriebene Sensorgehäuse 1 eines Messaufnehmers stellt lediglich eine besonders bevorzugte Ausführungsvariante der Erfindung dar und ist keineswegs beschränkend für den Schutzumfang der vorliegenden Erfindung zu verstehen, welcher durch die beigefügten Patentansprüche definiert ist.

Das Sensorgehäuse 1 weist einen Hohlkörper 2 auf, welcher direkt oder durch ein Zwischenstück an einer Halterung einer Einsteckvorrichtung, z.B. einer Einsteckstange, oder an einem Messrohr festgelegt werden kann.

Der Hohlkörper 2 weist eine plattenförmige Grundfläche 11 auf, ausgehend von welcher zumindest zwei, eine erste und eine zweite, Stifthülsen 3a und 3b in das Lumen, also das Innere eines Rohres, beispielsweise des Messrohres, hineinragen.

Der Hohlkörper 2 ist in der Ausführungsvariante der Fig. 1 und 2 kegelstumpfförmig dargestellt. Er kann allerdings auch eine andere Form, z.B. zylindrisch oder pyramidenstumpfförmig, aufweisen.

In Fig. 1, 2 und 2a sind insgesamt vier Stifthülsen dargestellt. Diese Variante ist bevorzugt, da mit dieser Gehäuseform mehrere Funktionalitäten, z.B. Drifterkennung und Richtungserkennung, in einem thermischen Durchflussmessgerät vorteilhaft konstruktiv vereinigt werden können.

Zugleich zeigt die Ausführungsvariante der Fig. 1 und 2, dass im Rahmen der vorliegenden Erfindung auch kompliziertere Sensorgehäusevarianten realisierbar sind.

Die vorliegende Erfindung kann in einer vereinfachten Ausführungsvariante auch lediglich die zwei Stifthülsen 3a und 3b aufweisen. Die Stifthülsen sind mit dem Hohlkörper einstückig und verbindungsnahtfrei, insbesondere im Verbindungsbereich 12, verbunden. Als Verbindungsnaht im Sinne der vorliegenden Erfindung ist eine Schweißnaht, Klebenaht, Lötnaht und dergleichen zu verstehen. Besonders bevorzugt sind ist das Gehäuse, also die Gesamtheit aus Stifthülsen und Hohlkörper, monolithisch ausgebildet.

Die erste und zweite Stifthülse 3a, 3b weisen jeweils eine mediumsberührende Stirnfläche 13 auf. Diese ist in Fig. 1 und 2 gewölbt, kann allerdings auch eben ausgebildet sein.

Die Stifthülsen 3a und 3b können jeweils gestuft ausgebildet sein, wodurch ein besseres Einführen und Positionieren eines Heizelements und/oder eines Temperatursensors in der Stifthülse durch die endständige Öffnung auf der mediumsabgewandten Seite der Stifthülse erfolgen kann.

Die geometrische Ausgestaltung einer jeweiligen Stifthülse 3a oder 3b ist dergestalt, dass ausgehend von der Stirnfläche 13 zunächst ein erster Abschnitt 8a mit zylindrischer Stifthülsenwandung und einem ersten kontinuierlichen Zylindermanteldurchmesser d1 folgt. Sodann folgt ein zweiter Abschnitt 8b mit einer zylindrischen Stifthülsenwandung und einem zweiten kontinuierlichen Zylindermanteldurchmesser d2.

Alternativ kann auch der erste und/oder zweite Abschnitt eine konische Form aufweisen. In diesem Fall entspricht der Durchmesser d1 und/oder d2 einem gemittelten Wert. Der Übergangsbereich zwischen dem ersten und dem zweiten Abschnitt 8a und 8b ist nicht abrupt, sondern weist ein kontinuierliches Anwachsen des Durchmessers vom ersten Durchmesser d1 auf einen zweiten Durchmesser d2 auf. Es handelt sich bei einer entsprechenden Stufung 9 daher nicht um einen abrupten sondern einen allmählichen Wechsel des Durchmessers. Sodann geht die Stifthülse in einem Übergangsbereich 10 in einen dritten Abschnitt 8c über, welcher kegelstumpfförmig ausgebildet ist und bei welchem der Durchmesser d allmählich im Verlauf des Kegelstumpfs bis zu einem Übergangsbereich 7 zum Hohlkörper 2 allmählich anwächst. Die Stifthülsen 3a und 3b weisen eine Länge I1 von zumindest 10 mm aufweisen.

Dem Abschnitt 8a ist gemäß der Definition der vorliegenden Erfindung die Stirnfläche 13 zugeordnet. In diesem Abschnitt 8a eines ersten der beiden Stifthülsen 3a und 3b ist ein nicht näher dargestelltes Heizelement bzw. ein Heizer angeordnet. Dies kann z.B. auch ein beheizbares Widerstandsthermometer sein. Das Heizelement muss nicht zwingend an der Stirnfläche oder Zylindermantelfläche der Stifthülse anliegen sondern kann vorzugsweise über eine Kupferbrücke mit der Wandung der Stifthülse thermisch gekoppelt sein. Gleiches gilt auch für die weiteren optionalen Stifthülsen. Eine entsprechende Anordnung und deren Vorteile sind in der DE 10 2008 015 359 A1 im Detail beschrieben.

Im Abschnitt 8a eines zweiten der beiden Stifthülsen 3a und 3b ist Temperatursensor zur Ermittlung der Mediumstemperatur angeordnet. Dieser kann ebenfalls als beheizbares Widerstandsthermometer ausgebildet sein, wobei im Betrieb des thermischen Durchflussmessgerätes vorzugsweise jeweils eines der Widerstandsthermometer aktiv beheizt und eines der Widerstandsthermometer unbeheizt betrieben werden kann.

Die Wandstärke der Stifthülsen 3a und 3b beträgt zumindest im Abschnitt 8a weniger als 0,5 mm, vorzugsweise weniger oder gleich wie 0,4 mm, insbesondere 0,1 bis 0,4 mm. Aufgrund der dünnen Wandstärke kann ein besonders günstiger Wärmeübergang erreicht werden.

Die Länge l2 dieses Abschnitts 8a kann zumindest 2 mm, vorzugsweise jedoch 3-10 mm betragen.

Das Verhältnis der Länge l2 zum Durchmesser d1 ist für den ersten Abschnitt 8a vorzugsweise größer als 5, besonders bevorzugt gleich oder größer als 7.

In einer bevorzugten Ausführungsvariante der Erfindung beträgt das durchschnittliche Verhältnis d_{Mittelwert}/ l1 für die gesamte Stifthülse vorzugsweise größer als 4, wobei sich der Durchmesser immer auf die jeweilige Länge des Abschnitts der Stifthülse bezieht, in welchem der Durchmesser tatsächlich vorhanden ist. Im Falle eines Kegelstumpfes, wie in Abschnitt 8c, kann eine Mittelwertbildung der Durchmesser erfolgen.

Das Gehäuse 2 ist aus Metall gefertigt. Als besonders bevorzugtes Metall kann Stahl genutzt werden. Alternativ kann, z.B. für stark-korrosive Medien, auch Titan als Wandungsmaterial genutzt werden.

Zusätzlich kann das Gehäuse sodann noch mit einer metallischen Außenbeschichtung versehen werden, um ggf. die Widerstandsfähigkeit gegenüber bestimmten Medien zu erhöhen. Diese Außenbeschichtung zählt gemäß der vorliegenden Erfindung jedoch nicht zum Gehäuse 2 sondern als zusätzlich auf das Gehäuse aufgebrachte Materiallage.

Abweichend von der vorbeschriebenen Grundform für ein erfindungsgemäßes thermisches Durchflussmessgerät weist die in Fig. 1 und 2 dargestellte Ausführungsvariante eine optionale Strömungsstörmung 5 auf, welche als Stifthülse oder als Massivelement ausgebildet sein kann, sowie eine ebenfalls optionale dritte Stifthülse 4.

Die Strömungsstörung 5 weist gegenüber den ersten beiden Stifthülsen 3a und 3b zumindest in einem Endbereich mit einer Stirnfläche eine andere geometrische Querschnittsform auf. Insbesondere ist der Endbereich mit der Stirnfläche prismatisch ausgebildet. In der Ausführungsvariante der Fig. 1 und 2 ist die Querschnittsform als ein Dreieck ausgebildet. Die Strömungsstörung 5 ist in der dargestellten ersten Strömungsrichtung D vor der dritten Stifthülse 5 angeordnet.

Die erste und die zweite Sensorhülse bilden eine gemeinsame Verbindungsachse aus. Die erste Strömungsrichtung D ist derart definiert, dass sie in einem Winkel von 80-100° zu der Verbindungsachse, auf einer Ebene die senkrecht zu den Längsachsen der beiden vorgenannten Sensorhülsen verläuft und auf der die Verbindungsachse liegt, angeordnet ist. Das Messmedium in der ersten Strömungsrichtung trifft zunächst auf das Strömungshindernis 4. Das dritte Sensorelement 5 liegt teilweise oder vollständig im Strömungsschatten dieses Strömungshindernisses 4.

Je nach Positionierung des Sensors in der Mediumsströmung kann es anstatt der ersten Strömungsrichtung D auch eine zweite in den Figuren nicht dargestellte Strömungsrichtung geben, welche zur ersten Strömungsrichtung D entgegengesetzt ist. In dieser Strömungsrichtung wird die dritte Stifthülse direkt angeströmt.

Die derart angeordnete dritte Stifthülse 5, welche ebenfalls einen Heizer aufweist, kann zur Richtungserkennung genutzt werden.

Das allgemeine Verfahren zur Strömungsrichtungserkennung ist in den Druckschriften DE 10 2009 045 956 A1 und DE 10 2010 040 285 A1 beschrieben.

Es erfolgt dabei die Ermittlung eines Entscheidungskoeffizienten DC auf Grundlage zweier Leistungskoeffizienten bzw. Powerkoeffizienten PC1 und PC2. Im vorliegenden Fall bezieht sich ein Leistungskoeffizient PC1 auf den Heizer in einer der Stifthülsen 3a oder 3b und ein zweiter Leistungskoeffizient auf den Heizer in der dritten Stifthülse 4. Der Entscheidungskoeffizient ermittelt sich wie folgt DC= (PC2-PC1)/PC2. Durch Abgleich des Entscheidungskoeffizienten mit einem Grenzwert kann sodann entschieden werden, von welcher Richtung die Strömung D durch ein Rohr bzw. Messrohr fließt. Es ist klar, dass der Leistungskoeffizient des Heizers der dritten Stifthülse sich ändern wird, je nachdem ob sich die Stifthülse im Strömungsschatten des Strömungshindernisses 5 aufhält oder ob sie direkt angeströmt wird.

Wie man aus Fig. 1 und 2 erkennt, weist die dritte Stifthülse 4 eine geringere Gesamtlänge l3 gegenüber der Gesamtlänge der ersten und zweiten Hülsen 3a und 3b auf. Die Hülse weist, analog zu den Stifthülse 3a, 3b eine Stirnfläche 13 auf, welche einem ersten zylindrischen Abschnitt 8a der Stifthülse 4 zugeordnet ist. An diesen ersten Abschnitt schließt sich ein dritter Abschnitt 8c an, welcher analog zu den Hülsen 3a und 3b kegelförmig ausgebildet ist. Ein zweiter zylinderischer Abschnitt 8b fehlt bei dieser Stifthülse. In dieser kürzeren vierten Stifthülse 4 ist ebenfalls ein Heizer, z.B. ein beheizbares Widerstandsthermometer, angeordnet. Zudem weist das Strömungshindernis 5 auch eine geringere Gesamtlänge l3 auf als die Gesamtlänge l1 der ersten und der zweiten Stifthülse 3a und 3b. Durch die unterschiedlichen Ebenen senkrecht zu den Längsachsen der Stifthülsen auf welchem die Heizer angeordnet sind, wird die Durchflussmessung durch die Richtungserkennung nicht beeinflusst.

Es ist verständlich, dass die kürzere dritte Stifthülse 4 auch einen anderen Anschmutzungsgrad aufweist. Daher kann auch durch Verhältnisbildung z.B. der Leistungskoeffizienten des Heizers in der ersten oder zweiten Stifthülse 3a, 3b mit dem Heizer in der dritten Stifthülse 4 eine Einschätzung des Sensordrifts über die Betriebszeit des thermischen Durchflussmessgerätes getroffen werden. Ggf. kann eine Quantifizierung des Sensordrifts erfolgen und besonders bevorzugt Kompensation des Sensordrifts bei der Durchflussmessung erfolgen.

Sofern das Strömungshindernis 5 als Sensorhülse genutzt wird, so kann auch in dieser Sensorhülse ein Heizer bzw. ein Heizelement, vorzugsweise ein beheizbares Widerstandsthermometer, eingesetzt werden. Bereits aufgrund der unterschiedlichen geometrischen Form ist ein anderes Anschmutzungsverhalten dieser Stifthülse zu erwarten und damit ein anderer Sensordrift im Verlauf der Betriebsdauer des thermischen Durchflussmessgeräts. Beispielsweise durch Differenzbildung der Leistungskoeffizienten der verschiedenen Heizelemente kann verglichen werden, um wieviel Prozent die Differenzen während des Messbetriebes ändern, so dass ein Sensordrift noch zuverlässiger detektierbar und kompensierbar ist.

Optional kann das Gehäuse 1 einen Bügel 6 aufweisen, welcher die Anordnung der ersten und der zweiten Stifthülse 3a, 3b, der optionalen vierten Stifthülse 4 und des stiftförmige Element 5 bogenförmig überspannt und mit dem Hohlkörper 2 vorzugsweise ebenfalls monolithisch und nahtfrei verbunden ist. Dieser Bügel dient vorzugsweise als strömungsführendes Element.

Ein monolithisches Sensorgehäuse mit zumindest zwei entsprechend langen dünnwandigen Stifthülsen ist zudem eine fertigungstechnische Herausforderung. Mittels Feinguss sind entsprechende Strukturen in kosten- und zeitintensiver Weise fertigbar. Die verwendeten Metallmaterialien müssen zudem auch für den Guss geeigneten sein. Für einen gelungenen Feinguss müssen u.a. viele Aspekte wie die Abkühlungsgeschwindigkeit und ggf. Nachbearbeitungsschritte zur Oberflächenbearbeitung beachtet werden. Ähnliche Nachteile treten auch bei Urformverfahren, z.B. dem sogenannten Metal Injection Molding (MIM) auf, welches grundsätzlichauch im Rahmen der Erfindung zur Herstellung des Sensorgehäuses genutzt werden kann. Der besondere Vorteil des MIM-Verfahrens ist eine vergleichsweise hohe Fertigungsgeschwindigkeit.

Besonders bevorzugt sind generative Fertigungsverfahren, wie Strahlschmelzverfahren. wie z.B. das selektives Laserschmelzen, welches auch als SLM-Verfahren bekannt ist, um einen derartigen Gegenstand mit entsprechend-dünner Wandstärke und entsprechender Länge der Stifthülsen zu fertigen.

Beim SLM-Verfahren kann ein Metallpulver in einer dünnen Schicht auf eine Oberfläche aufgebracht werden. Das Metallpulver wird sodann durch Laserstrahlung lokal vollständig geschmolzen und erstarrt zu einer festen Materialschicht in einer Schichtdicke von typischerweise 15-150 µm. Sodann wird die Oberfläche um den Betrag der Schichtdicke abgesenkt und eine neue Materialschicht aufgetragen. Auf diese Weise bildet sich allmählich das Gehäuse 1 des Messaufnehmers heraus. Materialspannungen und korrosionsanfällige Nahtstellen sind dabei nicht vorhanden.

## Patentansprüche

1. Thermisches Durchflussmessgerät umfassend einen Sensor mit einem metallischen Sensorgehäuse (1), welches einen Hohlkörper (2) zum Anschluss an eine Einsteckvorrichtung und/oder eine Rohrwandung aufweist, wobei der Hohlkörper (2) eine Grundfläche (11) aufweist;
wobei das Sensorgehäuse (1) zumindest eine erste und eine zweite Stifthülse (3a, 3b) aufweist, welche ausgehend von der Grundfläche (11) hervorstehen,
wobei die erste und zweite Stifthülse (3a, 3b) jeweils eine äußere, mit Medium beaufschlagbare Fläche aufweisen,
wobei das metallische Sensorgehäuse (1) einstückig ausgebildet ist,
wobei die Stifthülsen (3a, 3b) und der Hohlkörper (2) nahtfrei miteinander verbunden sind,
wobei das Sensorgehäuse (1) ein Strömungshindernis (5) aufweist, wobei das Sensorgehäuse (1) zumindest eine dritte , einen Heizer aufweisende Stifthülse (4) aufweist, wobei das Strömungshindernis (5) derart zur dritten Stifthülse (5) angeordnet ist, dass die dritte Stifthülse (5) bei Anströmung des Sensorgehäuses (1) aus einer vorbestimmten Strömungsrichtung (D) teilweise oder vollständig im Strömungsschatten des Strömungshindernisses (5) liegt, während die erste und die zweite Stifthülse (3a, 3b) außerhalb des Strömungsschattens des Strömungshindernisses (5) angeordnet sind, wobei die dritte Stifthülse (4) und/oder das Strömungshindernis (5) ausgehend von der Grundfläche (11) des Hohlkörpers (2) in den Innenbereich des Rohres hineinragen und nahtfrei mit dem Hohlkörper (2) verbunden sind,
wobei die Gesamtlänge (l3) der dritten Stifthülse (4) und/oder des Strömungshindernisses (5) geringer ist als die Gesamtlänge (l1) der ersten oder zweiten Stifthülse (3a, 3b), und wobei das Sensorgehäuse (1) einen bogenförmigen Bügel (6) aufweist, welcher zumindest die erste und zweite Stifthülse (3a, 3b) überspannt und welcher mit dem Hohlkörper (2) nahtfrei verbunden ist.

2. Thermisches Durchflussmessgerät nach Anspruch 1, **dadurch gekennzeichnet, dass** das metallische Sensorgehäuse (1) als ein monolithisches Bauteil ausgebildet ist.

3. Thermisches Durchflussmessgerät nach Anspruch 1 oder 2, **dadurch gekennzeichnet, dass** jede der Stifthülsen (3a, 3b) jeweils einen endständigen Abschnitt (8a) mit einer mediumsberührenden Stirnfläche (13) aufweist und dass in der ersten Stifthülse (3a), insbesondere in dem endständigen Abschnitt (8a) dieser Stifthülse (3a), ein Heizer angeordnet ist und dass in der zweiten Stifthülse (3b), insbesondere in dem endständigen Abschnitt (8a) dieser Stifthülse (3b), ein Temperatursensor zur Ermittlung der Mediumstemperatur angeordnet ist.

4. Thermisches Durchflussmessgerät nach einem der vorhergehenden Ansprüche, **dadurch gekennzeichnet, dass** jede der Stifthülsen (3a, 3b) zumindest in dem endständigen Abschnitt (8a) eine Wandstärke von weniger als 0,5 mm, vorzugsweise zwischen 0,1-0,4 mm, aufweist.

5. Thermisches Durchflussmessgerät nach Anspruch 4, **dadurch gekennzeichnet, dass** die Wandstärke zumindest im Bereich des endständigen Abschnitts (8a) um weniger als 20%, vorzugsweise um weniger als 10%, variiert.

6. Thermisches Durchflussmessgerät nach einem der vorhergehenden Ansprüche, **dadurch gekennzeichnet, dass** zumindest der endständige Abschnitt (8a) der Stifthülse (3a, 3b) eine zylindrische und/oder konische Mantelfläche aufweist mit einem Durchmesser (d1), wobei der Durchmesser (d1) im Falle einer konischen Mantelfläche einem gemittelten Wert entspricht, und dass sich der endständige Abschnitt über eine Länge (l2) erstreckt, wobei das Verhältnis (l2/d1) größer oder gleich fünf, vorzugsweise größer oder gleich sieben, ist.

7. Thermisches Durchflussmessgerät nach einem der vorhergehenden Ansprüche, **dadurch gekennzeichnet, dass** das Sensorgehäuse (1) aus Stahl und/oder Titan und/oder Hastalloy besteht.

8. Thermisches Durchflussmessgerät nach einem der vorhergehenden Ansprüche, **dadurch gekennzeichnet, dass** die zumindest eine dritte Stifthülse (4) parallel zur ersten und/oder zweiten Stifthülse (3a, 3b) verläuft.

9. Thermisches Durchflussmessgerät nach einem der vorhergehenden Ansprüche, **dadurch gekennzeichnet, dass** die Länge (l2) des endständigen Abschnitts (8a) zumindest 2 mm, vorzugsweise 3-10 mm, beträgt.

10. Thermisches Durchflussmessgerät nach einem der vorhergehenden Ansprüche, **dadurch gekennzeichnet, dass** die Gesamtlänge (l1) einer Stifthülse (3a, 3b) zumindest 10 mm beträgt.

## Claims

1. Thermal flowmeter comprising a sensor with a metal sensor housing (1), said housing comprising a hollow body (2) designed to connect to a plug-in apparatus and/or a pipe wall, wherein said hollow body (2) has a base area (11);
wherein the sensor housing (1) comprises at least a first and a second pin sleeve (3a, 3b), said pin sleeves projecting out of the base area (11),
wherein the first and the second pin sleeve (3a, 3b) each have an exterior surface that can be exposed to medium,
wherein the metal sensor housing (1) is designed as a single piece,
wherein the pin sleeves (3a, 3b) and the hollow body (2) are seamlessly connected to one another,
wherein the sensor housing (1) features a flow obstacle (5),
wherein the sensor housing (1) has at least a third pin sleeve (4) featuring a heater element,
wherein the flow obstacle (5) is arranged on the third pin sleeve (5) in such a way that the third pin sleeve (5) is partially or completely in the flow shadow of the flow obstacle (5) in the event of medium flow to the sensor housing (1) from a predefined flow direction (D), while the first and the second pin sleeve (3a, 3b) are arranged outside the flow shadow of the flow obstacle (5), wherein, starting from the base area (11) of the hollow body (2), the third pin sleeve (4) and/or the flow obstacle (5) project into the interior of the tube and are seamlessly connected to the hollow body (2),
wherein the total length (l3) of the third pin sleeve (4) and/or of the flow obstacle (5) is less than the total length (l1) of the first or the second pin sleeve (3a, 3b) and wherein the sensor housing (1) has an arc-shaped bracket (6), which at least spans the first and second pin sleeve (3a, 3b) and is seamlessly connected to the hollow body (2).

2. Thermal flowmeter as claimed in Claim 1, **characterized in that** the metal sensor housing (1) is designed as a monolithic component.

3. Thermal flowmeter as claimed in Claim 1 or 2, **characterized in that** each of the pin sleeves (3a, 3b) has a terminal section (8a) with a front face (13) in contact with the medium and **in that** a heater element is arranged in the first pin sleeve (3a), particularly in the terminal section (8a) of said pin sleeve (3a) and **in that** a temperature sensor to determine the medium temperature is arranged in the second pin sleeve (3b), particularly in the terminal section (8a) of said pin sleeve (3b).

4. Thermal flowmeter as claimed in one of the previous claims, **characterized in that** each of the pin sleeves (3a, 3b) has a wall thickness of less than 0.5 mm, preferably between 0.1 and 0.4 mm, at least in the terminal section (8a).

5. Thermal flowmeter as claimed in Claim 4, **characterized in that** the wall thickness varies at least in the area of the terminal section (8a) by less than 20 %, preferably by less than 10 %.

6. Thermal flowmeter as claimed in one of the previous claims, **characterized in that** at least the terminal section (8a) of the pin sleeve (3a, 3b) has a cylindrical and/or conical lateral surface with a diameter (d1), wherein in the case of a conical lateral surface the diameter (d1) corresponds to an average value, and **in that** the terminal section extends over a length (l2), wherein the ratio (l2/d1) is greater than or equal to five, preferably greater than or equal to seven.

7. Thermal flowmeter as claimed in one of the previous claims, **characterized in that** the sensor housing (1) is made from steel and/or titanium and/or Hastelloy.

8. Thermal flowmeter as claimed in one of the previous claims, **characterized in that** the at least one third pin sleeve (4) runs parallel to the first and/or second pin sleeve (3a, 3b).

9. Thermal flowmeter as claimed in one of the previous claims, **characterized in that** the length (l2) of the terminal section (8a) is at least 2 mm, preferably between 3 and 10 mm.

10. Thermal flowmeter as claimed in one of the previous claims, **characterized in that** the total length (l1) of a pin sleeve (3a, 3b) is at least 10 mm.

## Revendications

1. Débitmètre thermique comprenant un capteur avec un boîtier de capteur (1) métallique, lequel boîtier comprend un corps creux (2) destiné au raccordement à un dispositif enfichable et/ou à une paroi de tube, le corps creux (2) présentant une surface de base (11) ;
le boîtier de capteur (1) comprenant au moins une première et une deuxième douille (3a, 3b), lesquelles douilles font saillie de la surface de base (11),
la première et la deuxième douille (3a, 3b) présentant chacune une surface extérieure pouvant être alimentée avec le produit,
le boîtier de capteur (1) métallique étant constitué d'une seule pièce,
les douilles (3a, 3b) et le corps creux (2) étant reliés entre eux sans soudure,
le boîtier de capteur (1) présentant un corps perturbateur (5),
le boîtier de capteur (1) présentant au moins une troisième douille (4) comprenant un élément chauffant,
le corps perturbateur (5) étant disposé sur la troisième douille (5) de telle sorte que la troisième douille (5), en cas de débit de produit sur le boîtier de capteur (1) à partir d'un sens d'écoulement (D) prédéfini, se trouve partiellement ou totalement dans une zone à l'abri de l'écoulement grâce au corps perturbateur (5), tandis que la première et la deuxième douille (3a, 3b) est disposée à l'extérieur de la zone à l'abri de l'écoulement du corps perturbateur (5), la troisième douille (4) et le corps perturbateur (5) faisant saillie de la surface de base (11) du corps creux (2) dans la zone intérieure du tube et étant reliées sans soudure avec le corps creux (2),
la longueur totale (l3) de la troisième douille (4) et/ou du corps perturbateur (5) étant inférieure à la longueur totale (l1) de la première ou de la deuxième douille (3a, 3b) et le boîtier de capteur (1) présentant un étrier (6) en forme d'arc, qui s'étend au moins sur la première et la deuxième douille (3a, 3b) et qui est relié sans soudure au corps creux (2).

2. Débitmètre thermique selon la revendication 1, **caractérisé en ce que** le boîtier de capteur (1) métallique est conçu en tant que composant monolithique.

3. Débitmètre thermique selon la revendication 1 ou 2, **caractérisé en ce que** chacune des douilles (3a, 3b) présente une partie terminale (8a) avec une surface frontale (13) en contact avec le produit et **en ce que** dans la première douille (3a), notamment dans la partie terminale (8a) de cette douille (3a), est disposé un élément chauffant et **en ce que** dans la deuxième douille (3b), notamment dans la partie terminale (8a) de cette douille (3b), est disposé un capteur de température destiné à déterminer la température du produit.

4. Débitmètre thermique selon l'une des revendications précédentes, **caractérisé en ce que** chacune des douilles (3a, 3b) présente, au moins dans la partie terminale (8a), une épaisseur de paroi de moins de 0,5 mm, de préférence comprise entre 0,1 et 0,4 mm.

5. Débitmètre thermique selon la revendication 4, **caractérisé en ce que** l'épaisseur de paroi varie dans la zone de la partie terminale (8a) de moins de 20 %, de préférence de moins de 10 %.

6. Débitmètre thermique selon l'une des revendications précédentes, **caractérisé en ce qu'**au moins la partie terminale (8a) de la douille (3a, 3b) présente une surface latérale cylindrique et/ou conique avec un diamètre (d1), le diamètre (d1) correspondant à une valeur moyennée dans le cas d'une surface latérale conique, et **en ce que** la partie terminale s'étend sur une longueur (l2), le rapport (l2/d1) étant supérieur ou égal à cinq, de préférence supérieur ou égal à sept.

7. Débitmètre thermique selon l'une des revendications précédentes, **caractérisé en ce que** le boîtier de capteur (1) est en acier et/ou en titane et/ou en Hastalloy.

8. Débitmètre thermique selon l'une des revendications précédentes, **caractérisé en ce que** l'au moins troisième douille (4) est parallèle à la première et/ou à la deuxième douille (3a, 3b).

9. Débitmètre thermique selon l'une des revendications précédentes, **caractérisé en ce que** la longueur (l2) de la partie terminale (8a) s'élève à au moins 2 mm, de préférence est comprise entre 3 et 10 mm.

10. Débitmètre thermique selon l'une des revendications précédentes, **caractérisé en ce que** la longueur totale (l1) d'une douille (3a, 3b) s'élève à moins 10 mm.
